Europäisches Patentamt

European Patent Office

Office européen des brevets

(11) Veröffentlichungsnummer: **0 003 546**
**B1**

(12) # EUROPÄISCHE PATENTSCHRIFT

(45) Veröffentlichungstag der Patentschrift:
20.06.84

(51) Int. Cl.³: **G 06 F 9/06**, G 05 B 19/00

(21) Anmeldenummer: **79100252.0**

(22) Anmeldetag: **29.01.79**

(54) **Mikroprogrammierbares Steuerwerk.**

(30) Priorität: **13.02.78 DE 2805939**

(43) Veröffentlichungstag der Anmeldung:
**22.08.79 Patentblatt 79/17**

(45) Bekanntmachung des Hinweises auf die Patenterteilung:
**20.06.84 Patentblatt 84/25**

(84) Benannte Vertragsstaaten:
**BE CH FR GB IT NL**

(56) Entgegenhaltungen:
**IBM TECHNICAL DISCLOSURE BULLETIN, Vol. 20, Nr. 1, Juni 1977, New York, BOOTH: "Microinterrupt via forced branch and link instruction", Seiten 334-336 "MOTOROLA SEMICONDUCTOR", 1976, ADI-410, MC 10801, Seiten 1-19**

(73) Patentinhaber: **SIEMENS AKTIENGESELLSCHAFT, Berlin und München Wittelsbacherplatz 2, D-8000 München 2 (DE)**

(72) Erfinder: **Mayer, Wolfgang, Apolloweg 4, D-8000 München 60 (DE)**

## Beschreibung

Die Erfindung betrifft ein mikroprogrammierbares Steuerwerk gemäss dem Oberbegriff des Patentanspruches 1.

In den letzten Jahren wurden für die Realisierung von komplexen Steuerungsaufgaben in immer grösserem Masse mikroprogrammierbare Steuerwerke, z.B. für periphere Geräte, eingesetzt. Sie bieten eine hohe Flexibilität in Änderung und Erweiterung ihrer Funktionen, da der wesentliche Teil der Steuerungseigenschaften durch das Mikroprogramm realisiert ist und Änderungen durch den Austausch des Mikroprogrammes erreicht werden können. Ein Nachteil der mikroprogrammierbaren Steuerwerke liegt darin, dass Operationen im Gegensatz zu reinen Hardware-Steuerungen zeitlich nur nacheinander ablaufen können. Dies führt zu wesentlichen Einschränkungen beim Einsatz in sehr schnellen Steuerwerken.

Zur Zeit werden zur Realisierung dieser mikroprogrammierbaren Steuerwerke vorwiegend Mikroprozessoren in MOS-Technologie verwendet. Bedingt durch diese Technologie und durch den für den weiten Einsatzbereich vorgesehenen breit gefächerten Befehlsatz ergeben sich Befehlszeiten von minimal einigen Mikrosekunden. Bipolare Mikroprozessoren haben im Vergleich dazu wesentlich kürzere Befehlszeiten, benötigen aber wesentlich mehr Einbauplatz und Leistung.

Ausserdem zeigt sich, dass von der Vielzahl der Befehle des Mikroprozessors in Steuerwerken für periphere Geräte meist nur eine kleine Anzahl von Befehlen benötigt wird. Diese Befehle haben folgende zwei Funktionen: Abfrage von veränderbaren Zuständen des zu steuernden Systems (Bedingungen), Veränderung (Steuerung) der Zustände des zu beeinflussenden Systems, z.B. aufgrund der abgefragten Bedingungen. Bei Verzicht auf die nicht benötigten Befehle ergibt sich eine starke Vereinfachung der logischen Struktur des Mikroprozessors und damit auch eine Verkürzung der Befehlszeiten. Das dann entstehende Steuerwerk kann mit TTL-Bausteinen und programmierbaren Festwertspeichern (PROM) aufgebaut werden. Mit einem solchen Steuerwerk werden Befehls- und Zykluszeiten von unter 100 Nano-Sekunden erreicht.

Aus der Literaturstelle «TTL-Programmschaltwerk mit PROM» «Elektronik» 1975, Heft 1, Seiten 53–57 ist ein derartiges Steuerwerk bekannt. Es besteht aus dem Speicher (PROM), einem Bedingungsmultiplexer und einem Statuszähler (Adresseneinheit). Der Statuszähler enthält die jeweils aktuelle Adresse des im Speicher enthaltenen Befehlswortes, das ausgeführt werden soll. An den Statuszähler wird ein Taktsignal angelegt, das den Zähler immer um eine Einheit weiterzählt, wenn ein Befehl ausgeführt worden ist. Weiterhin kann aber auch der Statuszähler mit einer Adresse geladen werden. Im Speicher sind die Programme mit den Befehlsworten enthalten. Der Speicher hat nun Ausgänge zur Abgabe von sogenannten Funktionssignalen, durch die die Steuerungsabläufe z.B. in einem peripheren Gerät ausgelöst werden. Er hat weiterhin Ausgänge zur Abgabe von Adressen einerseits für den Bedingungsmultiplexer, andererseits für den Statuszähler. Tritt nämlich im Ablauf des Programms ein Befehl auf, nach dem eine Bedingung abgefragt werden soll, dann wird der Bedingungsmultiplexer adressiert, dem die einzelnen Bedingungen als Bedingungssignale zugeführt werden. Der Bedingunsmultiplexer stellt fest, ob die Bedingung erfüllt ist oder nicht. Ist die Bedingung z.B. erfüllt, veranlasst er den Statuszähler, aus dem Speicher die Verzweigungsadresse für den nächsten auszuführenden Befehl zu übernehmen. Die Übernahme der Verzweigungsadresse aus dem Speicher erfolgt bei Anliegen des nächsten Taktsignales.

Eine weitere Ausführungsform eines derartigen Steuerwerkes ergibt sich aus der deutschen Offenlegungsschrift 2622974. Dieses Steuerwerk enthält ebenfalls einen Speicher, einen Bedingungsmultiplexer und eine Adresseneinheit. In dieser Literaturstelle ist ein Aufbau des Steuerwerkes angegeben, nach dem bei Vorliegen besonderer Befehle gewünschte Funktionen ausgeführt werden können.

Diese vorher beschriebenen Steuerwerke haben aber den Nachteil, dass ein Ablaufen eines programms von aussen nicht unterbrochen werden kann und dass ein Aufruf eines Unterprogrammes durch einen Befehl nicht möglich ist.

Aus der Literaturstelle «IBM Technical Disclosure Bull.» Vol. 20, Nr. 1, Juni 1977, Seiten 334 bis 336 ist ein Mikroprozessorsystem bekannt. Dieses enthält einen Speicher, ein Adressenregister und ein Operationsregister. Das Adressenregister kann über eine Selektionseinrichtung mit dem Inhalt des Operationsregisters bzw. mit modifizierten Adressen geladen werden. Damit ist auch die Einleitung einer sogenannten externen Unterbrechung eines laufenden Programmes möglich. Dazu ist es notwendig, dass die nächste Adresse des unterbrochenen Programms irgendwo zwischengespeichert und die erste Adresse des Unterprogramms in die Adresseneinheit eingespeichert wird. Von diesem in der Datentechnik allgemein üblichen Verfahren wird auch in der nachstehend beschriebenen Erfindung Gebrauch gemacht. Die dazu erforderlichen Mittel sind jedoch wesentlich einfacher ausgestaltet.

Die der Erfindung zugrundeliegende Aufgabe besteht darin, ein mikroprogrammierbares Steuerwerk der eingangs genannten Art so auszugestalten, dass mit einfachen Mitteln eine Unterbrechung des laufenden Programms möglich ist.

Diese Aufgabe wird bei einem mikroprogrammierbaren Steuerwerk der eingangs genannten Art gemäss dem kennzeichnenden Teil des ersten Patentanspruchs gelöst.

Weitere vorteilhafte Ausführungsformen der Erfindung sind in den Unteransprüchen gekennzeichnet.

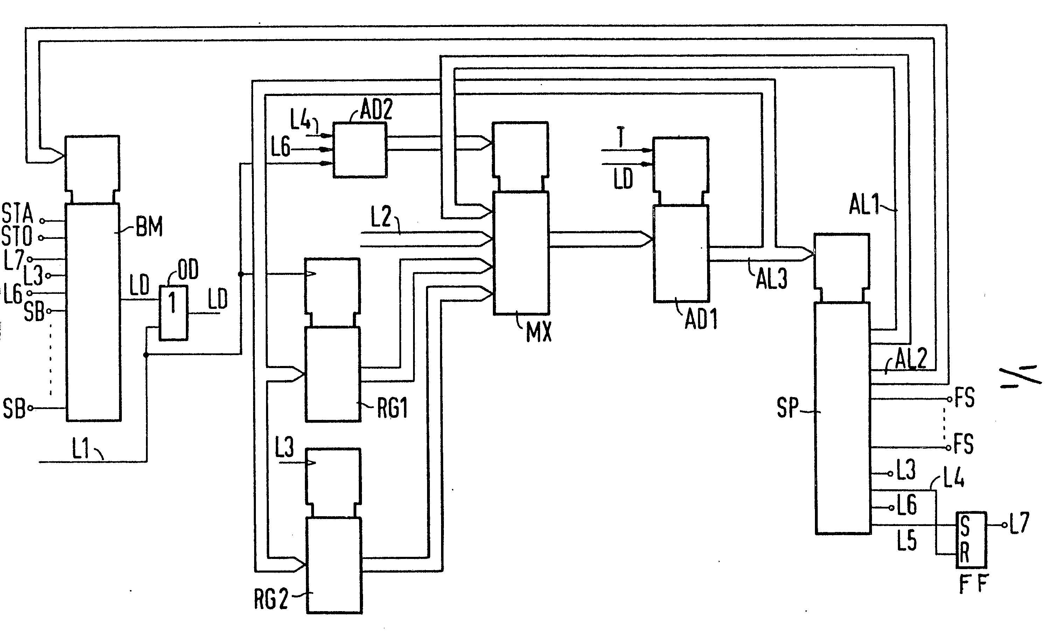

Anhand eines Ausführungsbeispiels, das in der Figur dargestellt ist, wird die Erfindung weiter erläutert. Die Figur zeigt den Aufbau des Steuerwerkes, mit dem auch Unterbrechungen ausgeführt werden können. Das Steuerwerk besteht dabei ausschliesslich aus handelsüblichen Bausteinen.

Es ist ein Speicher SP vorgesehen, der als programmierbarer Speicher (PROM) ausgeführt sein kann. In dem Speicher stehen die Programme mit den Befehlsworten, die zur Ausführung der gewünschten Funktionen mit dem Steuerwerk erforderlich sind. Der Speicher SP hat somit Ausgangsleitungen FS, an denen Funktionssignale entsprechend dem gerade bearbeiteten Befehlswort abgegeben werden und die zur Steuerung z. B. eines peripheren Gerätes herangezogen werden können. Weiterhin hat der Speicher SP Ausgangsleitungen AL1 und AL2, auf denen Adressen abgeben werden. Schliesslich gehen von dem Speicher SP noch Leitungen L3 bis L6 ab, die als Steuersignale für andere Baueinheiten des Steuerwerkes dienen.

Die einzelnen Befehlsworte im Speicher SP werden mit Hilfe einer Adresseneinheit AD1 adressiert. Diese kann als Statuszähler aufgebaut sein. Sie hat einen Eingang für ein Taktsignal T und einen Eingang für ein Ladesignal LD. In der Adresseneinheit AD1 steht immer die aktuelle Adresse des Befehles, der als nächster Befehl ausgeführt werden soll. Der Ausgang der Adresseneinheit AD1 ist über eine Leitung AL3 mit dem Speicher SP verbunden.

Es ist weiterhin ein Bedingungsmultiplexer BM vorgesehen. An diesen Bedingungsmultiplexer BM werden an seinen Eingängen Bedingungssignale SB, ein Startsignal, ein Stopsignal STA und weitere von anderen Baueinheiten des Steuerwerks kommende Signale angelegt. Er ist schliesslich noch mit der Leitung AL2, die vom Speicher SP kommen, verbunden. Über diese Leitungen AL2 wird die entsprechende Bedingung im Bedingungsmultiplexer BM vom Speicher SP zur Abfrage einer Bedingung bei der Abarbeitung eines Befehlswortes adressiert. Ist die Bedingung erfüllt, gibt der Bedingungsmultiplexer BM das Ladesignal SD ab, das der Adresseneinheit AD1 am Eingang für das Ladesignal zugeführt wird.

An den Eingang der Adresseneinheit AD1 ist ein weiterer Multiplexer MX angeschlossen. An einen Eingang dieses Multiplexers MX führen die Leitungen AL1. Auf diesen Leitungen AL1 wird bei Auftreten einer Verzweigung die Verzweigungsadresse abgegeben und dem Multiplexer MX zugeführt. Der Multiplexer MX hat noch weitere Eingänge, an denen ihm Adressen von Befehlsworten von anderen Baueinheiten des Steuerwerks oder von aussen zugeführt werden können.

Jeweils einer der Eingänge des Multiplexers MX wird zu der Adresseneinheit AD1 in Abhängigkeit des Ausgangssignales von einer weiteren Adresseneinheit AD2 durchgeschaltet. In Abhängigkeit der weiteren Adresseneinheit AD2 können somit Adressen für Befehlsworte im Speicher SP, von verschiedenen Baueinheiten des Steuerwerks oder von aussen in die Adresseneinheit AD1 geladen werden. So kann ein Eingang des Multiplexers MX mit Leitungen L2 verbunden sein, an die von aussen eine Adresse angelegt wird. Andere Eingänge des weiteren Multiplexers MX können mit Ausgängen von Adressenregistern RG1 und RG2 verbunden sein. In den Adressenregistern RG1 und RG2 können die aktuellen Adressen zwischengespeichert werden, die bei Auftreten einer Unterbrechung des Programms bearbeitet werden sollten. Aus diesem Grunde sind die Ausgänge der Adresseneinheit AD1 jeweils mit den Eingängen der Adressenregister RG1 und RG2 verbunden.

Im folgenden soll die Funktion des Steuerwerkes beschrieben werden. Solange keine Unterbrechung im Programmablauf auftritt, arbeitet das Steuerwerk in üblicher Art und Weise. In der Adresseneinheit AD1 steht dann jeweils die Adresse des zu bearbeitenden Befehlswortes im Speicher SP. Diese Adresse wird bei Anliegen eines Taktsignales T an der Adresseneinheit AD1 um eine Einheit erhöht, wodurch die aktuelle Adresse des nächsten zu bearbeitenden Befehlswortes gebildet wird. Die Befehlsworte werden in dem Speicher SP ausgeführt. Erfordert die Ausführung eines Befehlswortes keine Bedingungsabfrage, so werden Funktionssignale an den Leitungen FS des Speichers SP abgegeben. Erfordert dagegen ein Befehlswort eine Bedingungsabfrage, so wird über die Leitungen AL2 der Bedingungsmultiplexer BM adressiert und an den Leitungen AL1 erscheint die Verzweigungsadresse. Mit Hilfe der Adresse für den Bedingungsmultiplexer BM wird von diesem überprüft, ob die entsprechende Bedingung vorliegt oder nicht. Liegt die Bedingung vor, so gibt der Bedingungsmultiplexer BM ein Ladesignal ab, das der Adresseneinheit AD1 zugeführt wird. Gleichzeitig schaltet der Multiplexer MX die Leitungen AL1 zur Adresseneinheit AD1 durch. Somit kann die Verzweigungsadresse in das Adressenregister AD1 geladen werden. Das nächste Befehlswort im Speicher SP, das ausgeführt wird, ist dann das dieser Verzweigungsadresse zugeordnete Befehlswort.

Insoweit unterscheidet sich das Steuerwerk von den bekannten Steuerwerken nur dadurch, dass die Verzweigungsadresse über den weiteren Multiplexer MX zur Adresseneinheit AD1 geführt ist. Dieser weitere Multiplexer MX wird aber erst dann wirklich erforderlich, wenn ein Ablaufen des Programms unterbrochen werden soll. Die Funktionsweise des Steuerwerks in einem solchen Fall soll nun erläutert werden.

Wird eine Unterbrechung des Programms an einer beliebigen Stelle von aussen gewünscht, so wird an die Leitungen L2, die zum Multiplexer MX führen, von aussen eine Adresse angelegt, an der das erste Befehlswort steht, das zur Bearbeitung der Unterbrechung erforderlich ist. Gleichzeitig wird an die Leitung L1 ein Unterbrechungssignal angelegt. Dies führt zu einem ODER-Glied OD, deren anderer Eingang mit der Leitung für das Ladesignal LD vom Bedingungsmultiplexer MB verbunden ist. Am Ausgang der ODER-Schaltung OD erscheint also immer dann ein Signal, wenn ein Ladesignal vom Bedingungsmultiplexer BM oder ein Unterbrechungssignal auf der Leitung L1 auftritt. Der Ausgang der ODER-Schaltung ist mit dem Eingang für das Ladesignal der Adressenein-

heit AD1 verbunden. Die Leitung L1 ist weiterhin zu der weiteren Adresseneinheit AD2 und zu dem ersten Adressenregister RG1 geführt. Liegt das Unterbrechungssignal an dem ersten Adressenregister RG1 an, so wird die aktuelle in der Adresseneinheit AD1 stehende Adresse in das erste Adressenregister RG1 übernommen. Das Unterbrechungssignal beeinflusst weiterhin die weitere Adresseneinheit AD2 derart, dass der weitere Multiplexer MX veranlasst wird, die Leitungen L2 zu der Adresseneinheit AD1 durchzuschalten. Bei Auftreten des nächsten Taktsignales ST wird dann die von aussen angelegte Adresse in die Adresseneinheit AD1 übernommen. Diese wird dem Speicher SO zugeführt, der mit der Bearbeitung der Unterbrechung beginnt. Die Adresse des Befehlswortes, bei dem das Programm unterbrochen worden ist, ist dagegen im ersten Adressenregister RG1 gespeichert.

Wenn das erste auf die Unterbrechung folgende Befehlswort im Speicher SP ausgeführt wird, wird ein Flip-Flop FF durch ein Signal auf der Leitung L5 gesetzt. Der Ausgang L7 dieses Flip-Flops FF ist mit dem Eingang des Bedingungsmultiplexers BM verbunden.

Ist der der Unterbrechung zugeordnete Programmteil im Speicher SP abgearbeitet, so wird am Ausgang L4 des Speichers SP ein Signal abgegeben. Dieses Signal setzt das Flip-Flop FF zurück, es wird gleichzeitig aber auch der weiteren Adresseneinheit AD2 zugeführt. Durch das Ausgangssignal des Flip-Flops FF wird der Bedingungsmultiplexer BM veranlasst, an seinem Ausgang ein Ladesignal LD für die Adresseneinheit AD1 abzugeben. Durch das der weiteren Adresseneinheit AD2 zugeführte Signal auf der Leitung L4 wird diese veranlasst, den weiteren Multiplexer MX derart anzusteuern, dass das erste Adressenregister RG1 zur Adresseneinheit AD1 durchgeschaltet wird. Somit wird der Inhalt des ersten Adressenregisters RG1 in die Adresseneinheit AD1 geladen. Dies ist aber gerade die Adresse desjenigen Befehlswortes, das bei Auftreten der Unterbrechung zur Bearbeitung anstand. Nach Abarbeitung der Unterbrechung wird somit die Bearbeitung der Befehle an der Stelle fortgesetzt, an der die Unterbrechung aufgetreten war.

Wird intern im Steuerwerk eine Unterbrechung gewünscht, z.B. weil ein Unterprogramm abgearbeitet werden soll, so gibt der Speicher SP an seinem Ausgang L3 ein Signal ab, das dem zweiten Adressenregister RG2 zugeführt wird. Dieses Übernahmesignal veranlasst, dass die in der Adresseneinheit AD1 stehende aktuelle Adresse in das zweite Adressenregister RG2 übernommen wird. Die Adresse des ersten Befehlswortes des Unterprogrammes wird dagegen über die Leitungen AL1 und den Multiplexer in die Adresseneinheit AD1 übernommen. Das dazu notwendige Ladesignal LD wird von dem Bedingungsmultiplexer BM geliefert. Dazu wird dem Bedingungsmultiplexer BM das Singal auf der Leitung L3 ebenfalls zugeführt.

Nach der Abarbeitung des Unterprogramms erscheint am Ausgang L6 des Speichers SP ein Signal, das der weiteren Adresseneinheit AD2 zugeführt wird. Dieses Signal veranlasst die weitere Adresseneinheit AD2 dazu, den weiteren Multiplexer MX derart zu adressieren, dass das zweite Adressenregister RG2 mit der Adresseneinheit AD1 verbunden wird. Das zur Übernahme erforderliche Ladesignal wird wiederum vom Bedingungsmultiplexer BM erzeugt. Dazu wird ihm das Signal auf der Leitung L6 ebenfalls angeboten. Nach der Abarbeitung des Unterprogramms steht also in der Adresseneinheit AD1 wieder die Adresse desjenigen Befehlswortes, das nach der Verzweigung des Unterprogrammes als nächstes ausgeführt werden sollte.

Das Ausführungsbeispiel der Figur verwendet zwei Adressenregister RG1 und RG2. Selbstverständlich kann auch nur ein Adressenregister oder mehr als zwei Adressenregister vorgesehen sein. Die Adresseneinheit AD2 ist so aufgebaut, dass sie den weiteren Multiplexer MX so steuert, dass die Leitungen AL1 zur Adresseneinheit durchgeschaltet sind. Soll einer der anderen Eingänge des Multiplexers MX zur Adresseneinheit AD1 durchgeschaltet werden, so muss an die weitere Adresseneinheit AD2 ein besonderes Signal angelegt werden.

Begriffsliste
| SP | Speicher |
| FS | Ausgangsleitungen für Funktionssignale |
| AL1 | Ausgangsleitungen für Verzweigungsadressen |
| AL2 | Ausgangsleitungen für Bedingungsmultiplexeradresse |
| L3–L6 | Leitungen für Steuersignale |
| AD1 | Adresseneinheit |
| T | Taktsignale |
| LD | Ladesignale |
| AL3 | Ausgangsleitungen der Adresseneinheit AD1 |
| BM | Bedingungsmultiplexer |
| SM | Bedingungssignale |
| STA | Startsignal |
| STO | Stopsignal |
| MX | Weiterer Multiplexer |
| AD2 | Weitere Adresseneinheit |
| L2 | Leitungen für externe Adressen |
| RG1 u. 2 | Adressenregister |
| L1 | Leitungen für das Unterbrechungssignal |
| OD | ODER-Glied |
| FF | Flip-Flop |
| L7 | Ausgangsleitung des Flips FF |

**Patentansprüche**

1. Mikroprogrammierbares Steuerwerk mit einem Speicher (SP), in dem aus Befehlsworten bestehende Programme gespeichert sind, entsprechend denen entweder Funktionssignale geliefert werden oder abhängig vom Vorhandensein einer Bedingung eine Verzweigung zu einem anderen im Speicher vorhandenen Befehlswort durchgeführt wird, mit einem Bedingungsmulti-

7     **0003546**     8

plexer (BM), der vom Speicher adressiert wird, wobei an den Bedingungsmultiplexer Bedingungssignale angelegt sind und der bei Vorliegen einer, in einem Befehlswort angegebenen Bedingung ein Ladesignal abgibt, und mit einer Adresseneinheit (AD1), in der die aktuelle Adresse des im Speicher anzusteuernden Befehlswortes steht und in die bei Anliegen des Ladesignales vom Bedingungsmultiplexer die Verzweigungsadresse des nächsten auszuführenden Befehlswortes aus dem Speicher übernommen wird, dadurch gekennzeichnet, dass zur Ausführung von Unterbrechungen des gerade ablaufenden Programms ein weiterer Multiplexer (MX) vorgesehen ist, dessen einer Eingang mit Ausgangsleitungen (AL1) des Speichers (SP) für die Verzweigungsadressen verbunden ist und dessen Ausgang an die Adresseneinheit (AD1) angeschlossen ist, dass eine weitere Adresseneinheit (AD2) vorgesehen ist, deren Ausgang mit dem weiteren Multiplexer (MX) verbunden ist und die Adressen zum Durchschalten der verschiedenen Eingänge des weiteren Multiplexers zur Adresseneinheit (AD1) abgibt, und dass mindestens ein Adressenregister (RG1) vorgesehen ist, dessen Eingang mit dem Ausgang der Adresseneinheit (AD1) und dessen Ausgang mit einem Eingang des weiteren Multiplexers (MX) verbunden ist und in das bei Vorliegen eines von aussen oder von dem Speicher (SP) zugeführten Unterbrechungssignale die aktuelle Adresse aus der Adresseneinheit (AD1) übernommen wird.

2. Steuerwerk nach Anspruch 1, dadurch gekennzeichnet, dass zur Ausführung einer externen Unterbrechung ein weiterer Eingang des weiteren Multiplexers (MX) mit Leitungen (L2) verbunden ist, an die die Adresse des nächsten zu bearbeitenden Befehlswortes angelegt wird, und dass eine Leitung (L1) für ein Unterbrechungssignal vorgesehen ist, die mit der weiteren Adresseneinheit (AD2), dem Eingang für ein Übernahmesignal beim Adressenregister (RG1) und dem Eingang für ein Ladesignal bei der Adresseneinheit (AD1) verbunden ist.

3. Steuerwerk nach Anspruch 2, dadurch gekennzeichnet, dass an den Speicher (SP) ein Flip-Flop (FF) angeschlossen ist, das gesetzt wird, wenn der Programmablauf unterbrochen wird und das zurückgesetzt wird, wenn nach Beendigung der Bearbeitung der Unterbrechung der Inhalt des Adressenregisters (RG1) in die Adresseneinheit (AD1) übertragen wird, und dass der Ausgang des Flip-Flops (FF) mit einem Eingang des Bedingungsmultiplexers (BM) verbunden ist.

4. Steuerwerk nach einem der vorhergehenden Ansprüche, dadurch gekennzeichnet, dass ein zweites Adressenregister (RG2) vorgesehen ist, dessen Eingang mit dem Ausgang der Adresseneinheit (AD1), dessen Ausgang mit dem weiteren Multiplexer (MX) verbunden ist und dessen Eingang für ein Übernahmesignal mit einem Ausgang (L3) des Speichers (SP) verbunden ist, an dem ein Signal erscheint, wenn eine interne Programmunterbrechung ausgeführt wird.

5. Steuerwerk nach einem der vorhergehenden Ansprüche, dadurch gekennzeichnet, dass die weitere Adresseneinheit (AD2) mit Ausgängen (L4, L6) des Speichers (SP) verbunden ist, an denen Signale zur Rückübertragung des Inhaltes der Adressenregister (RG) in die Adresseneinheit (AD1) erscheinen.

**Claims**

1. Microprogrammable control unit having a store (SP) wherein programmes consisting of instruction words are stored, in accordance with which instruction words either function signals are supplied or, in dependence upon the presence of a condition, a branching is effected to another instruction word present in the store, with a condition multiplexer (BM) which is addressed by the store, whereby condition signals are applied to the condition multiplexer, and which transmits a load signal when a condition specified in an instruction word is present, and with an address unit (AD1), which includes the actual address of the instruction word to be selected in the store, and into which the transfer address of the next instruction word to be executed is transferred from the store when the load signal of the condition multiplexer is present, characterised in that in order to perform interruptions of the currently executed programme, there is provided a further multiplexer (MX), whose one input is connected to output lines (AL1) of the store (SP) for the transfer addresses and whose output is coupled to the address unit (AD1), that there is provided a further address unit (AD2), whose output is connected to the further multiplexer (MX) and which transmits addresses to the address unit (AD1) in order to switch through the different inputs of the further multiplexer, and that there is provided at least one address register (RG1), whose input is connected to the output of the address unit (AD1) and whose output is connected to an input of the further multiplexer (MX) and into which the actual address form the address unit (AD1) is transferred when an interruption signal, which is supplied from outside or from the store (SP), is present.

2. Control unit as claimed in claim 1, characterised in that in order to perform an external interruption an input of the further multiplexer (MX) is connected to lines (L2), to which the address of the next instruction word to be processed is applied, and that there is provided a line (L1) for an interruption signal, which line is connected to the further address unit (AD2), to the input for a transfer signal in the address register (RG1) and to the input for a load signal in the address unit (AD1).

3. Control unit as claimed in claim 2, characterised in that a flip-flop (FF) is connected to the store (SP), which is set when the programme run is interrupted and which is reset when following the termination of the processing of the interruption, the content of the address register (RG1) is transferred into the address unit (AD1), and that the output of the flip-flop (FF) is connected to an input of the condition multiplexer (BM).

4. Control unit as claimed in one of the preceding claims, characterised in that there is provided

5

a second address register (RG2), whose input is connected to the output of the address unit (AD1), whose output is connected to the further multiplexer (MX and whose input for a transfer signal is connected to an output (L3) of the store (SP), at which a signal occurs when an internal programme interruption is carried out.

5. Control unit as claimed in one of the preceding claims, characterised in that the further address unit (AD2) is connected to outputs (L4, L6) of the store (SP), at which signals occur which serve to tra back the content of the address register (RG) into the address unit (AD1).

## Revendications

1. Dispositif de contrôle microprogrammé, avec une mémoire (SP) dans laquelle sont mémorisés des programmes constitués par des mots d'instruction, et en fonction desquels sont soit fournis des singnaux de fonction ou réalisé en fonction de la présence d'une condition, un aiguillage vers un mot d'instruction présent dans la mémoire, avec un multiplexeur de condition (BM) qui est adressé par la mémoire, des signaux de condition étant appliqués au multiplexeur de condition, et qui, dans le cas de la présence d'une condition indiquée dans un mot d'instruction, émet un singal, et avec une unité d'adresses (AD1) dans laquelle est présente l'adresse du mot d'instruction à appeler dans la mémoire et dans laquelle, lors de l'application du signal de charge, l'adresse d'aiguillage du mot d'instruction suivant à exécuter est prise en charge, à partir de la mémoire, par le multiplexeur de condition, charactérisé par le fait que pour l'exécution d'interruptions du programme en cours de déroulement, il est prévu un multiplexeur supplémentaire (MX) dont une entrée est reliée à des conducteurs de sortie (AL1) de la mémoire (SP) pour les adresses d'aiguillage et dont la sortie est reliée à l'unité d'adresses (AD1), qu'il est prévu une unité d'adresses supplémentaire (AD2) dont la sortie est reliée au multiplexeur supplémentaire (MX) et émet les adresses pour établir la liaison des différentes entrées du multiplexeur supplémentaire avec l'unité d'adresses (AD1), et qu'il est prévu au moins un registre d'adresses (RG1) dont l'entrée est reliée à la sortie de l'unité d'adresses (AD1) et dont la sortie est reliée à l'entrée du multiplexeur supplémentaire (MX), et dans lequel, lors de la présence d'un signal d'interruption appliqué de l'extérieur ou par la mémoire (SP), l'adresse actuelle est prise en charge à partir de l'unité d'adresses (AD1).

2. Dispositif de contrôle selon la revendication 1, caractérisé par le fait que pour l'exécution d'une interruption extérieure, une autre entrée du multiplexeur supplémentaire (MX) est reliée avec des conducteurs (L2) auxquels est appliquée l'adresse du mot d'instruction suivant à traiter, et qu'il est prévu un conducteur (L1) pour un signal d'interruption, lequel conducteur est relié à l'unité d'adresses supplémentaire (AD2), à l'entrée pour un signal de prise en charge au niveau du registre d'adresses (TG1) et à l'entrée pour un signal de charge au niveau de l'unité d'adresses (AD1).

3. Dispositif de contrôle selon la revendication 2, caractérisé par le fait qu'à la mémoire (SP) est relié un multivibrateur bistable (FF) qui est activé lorsque le déroulement du programme est interrompu et qui est remis dans son état initial si, après l'exécution du traitement de l'interruption, le contenu du registre d'adresses (RG1) est transféré dans l'unité d'adresses (AD1), et que la sortie du multivibrateur bistable (FF) est reliée à une entrée du multiplexeur de condition (BM).

4. Dispositif de contrôle selon l'une des revendications précédentes, caractérisé par le fait qu'il est prévu un second registre d'adresses (RG2) dont l'entrée est reliée à la sortie de l'unité d'adresses (AD1), dont la sortie est reliée au multiplexeur supplémentaire (MX) et dont l'entrée est reliée, pour un signal de prise en charge, à la sortie (L3) de la mémoire (SP), au niveau de laquelle apparaît un signal lorsqu'une interruption interne de programme est exécutée.

5. Dispositif de contrôle selon l'une des revendications précédentes, caractérisé par le fait que l'unité d'adresses supplémentaire (AD2) est reliée à des sorties (L4, L6) de la mémoire (SP) sorties au niveau desquelles apparaissent des signaux pour la retransmission du contenu des registres d'adresses (RG) dans l'unité d'adresses (AD1).